# EUROPÄISCHE PATENTANMELDUNG

(11) **EP 2 381 677 A1**
(43) Veröffentlichungstag der Anmeldung: **26.10.2011**
(21) Anmeldenummer: 11163048.9
(22) Anmeldetag: 19.04.2011
(51) Int. Cl.: H04N 5/44, H04N 5/445, H04N 5/76, H01H 35/00, G04G 99/00

(54) **Fernsehgerät mit automatischer Abschaltung**

(30) Priorität: 26.04.2010 DE 102010016639; 31.05.2010 DE 102010017152
(71) Anmelder: Loewe Opta GmbH, 96317 Kronach (DE)
(72) Erfinder: Weickert, Bernd, 96224, Burgkunstadt (DE); Wolfgang, Maryniok, 96317, Kronach (DE)
(74) Vertreter: Pröll, Jürgen

(57) **Zusammenfassung**

Die Erfindung betrifft ein Fernsehgerät mit einer Empfangseinheit, einer Videosignalverarbeitungseinheit, einer Bedieneinheit, einer Steuereinheit und einem Display. Mittels der Bedieneinheit ist ein Bedienbefehl zur Einleitung eines automatischen Abschaltvorgangs eingebbar, mittels welchem das Fernsehgerät vom eingeschalteten Zustand in den Bereitschaftsbetrieb oder den ausgeschalteten Zustand schaltbar ist. Die Steuereinheit ermittelt als Reaktion auf den Empfang dieses Bedienbefehls den Zeitpunkt der Abschaltung des Fernsehgerätes unter Berücksichtigung einer Zeitinformation, die in dem momentan empfangenen Fernsehsignal enthalten ist oder zeitgleich mit dem momentan empfangenen Fernsehsignal übertragen wird.

## Beschreibung

Die Erfindung betrifft ein Fernsehgerät mit einer automatischen Abschaltung.

Es ist bereits bekannt, ein Fernsehgerät mit einer Abschaltautomatik zu versehen, die das Fernsehgerät vom eingeschalteten Zustand in den Bereitschaftsbetrieb oder den ausgeschalteten Zustand bringt. Diese Abschaltautomatik überprüft, ob ein empfangenes Fernsehsignal vorliegt oder nicht. Liegt beispielsweise für eine Zeitdauer von zwei Minuten kein empfangenes Fernsehsignal vor, dann erfolgt die genannte automatische Abschaltung. Diese Abschaltautomatik wirkt beispielsweise dann, wenn ein Fernsehzuschauer beim Fernsehen eingeschlafen ist und nach dem Sendeschluss des momentan eingestellten Fernsehkanals nur noch Rauschen zu empfangen ist.

Des Weiteren ist es bereits bekannt, ein Fernsehgerät mit einer Abschaltautomatik zu versehen, die das Fernsehgerät nach Ablauf einer vorgegebenen Zeitspanne, die beispielsweise eine Stunde beträgt, automatisch ausschaltet. Diese Abschaltautomatik wird vom Zuschauer durch eine Eingabe eines Bedienbefehls mittels der Bedieneinheit des Fernsehgerätes aktiviert und im Sinne einer Schlummerautomatik genutzt. Die vorgegebene Zeitspanne ist dabei vom Hersteller des Fernsehgerätes vorgegeben und in der Software einer Steuereinheit des Fernsehgerätes hinterlegt.

Aus der DE 40 21 386 C2 ist ein weiteres Fernsehgerät bekannt, welches eine Abschaltautomatik aufweist. Bei diesem Gerät ist mit dem Fernsteuerempfänger eine Zeitgeberschaltung verbunden, die in Abhängigkeit von einem vom Fernbedienungsgeber und/oder von der Ortsbedienung am Fernsehgerät empfangenen Funktionssteuersignal oder von einem beim Einschalten des Gerätes generierten Signal startet und mit Ablauf eines fest eingestellten Zeitfensters oder eines programmierbaren Zeitfensters ein Umschaltsteuersignal ausgibt, das die Umschaltung des Gerätes vom eingeschalteten Zustand in den Bereitschaftsbetrieb auslöst. Des Weiteren ist die Zeitgeberschaltung mit einer Rücksetzsteuerschaltung ausgestattet, die im Falle einer innerhalb einer vorgegebenen Zeitspanne eingegebenen Bedienbefehls die Zeitgeberschaltung zurücksetzt. Ferner ist die Zeitgeberschaltung dazu vorgesehen, zu einem vorgegebenen oder programmierten Zeitpunkt vor dem Ablauf des Zeitfensters ein Steuersignal auszugeben, das eine Ausgabe eines die Umschaltung des Gerätes vom eingeschalteten Zustand in den Bereitschaftsbetrieb ankündigenden Signals in die Wege leitet.

Aus der der DE 699 35 504 T2, der Übersetzung der Europäischen Patentschrift EP 1 066 577 B1, ist ein Videoverarbeitungssystem bekannt, das einem Benutzer die Möglichkeit bietet, ein Archiv mit Videoclips zu durchstöbern und alle Videoclips oder Teile davon zu speichern und/oder zu editieren, die Bildtextattribute enthalten, die mit Bildtextattributen, die von einem Benutzer selektiert wurden, übereinstimmen. Zu diesem Zweck analysiert das Videoverarbeitungssystem Bildtext in Videoframes. In Reaktion auf den Empfang wenigstens eines selektierten Bildtextattributes werden Videoströme ermittelt und/oder gefiltert.

Aus der DE 196 22 205 A1 ist ein Verfahren zur Vorprogrammierung einer Steuereinheit bekannt, bei welchem die zur Voreinstellung einer Sendung notwendigen Informationen bereits mit einer zeitlich vorher ausgestrahlten Programmankündigung übertragen werden, die Einstellinformationen nach dem Empfang als solche identifiziert werden und durch Eingabemittel eine Programmierung der Steuereinheit mit als Einstellinformationen identifizierten Daten ausgeführt wird.

Aus der DE 197 00 244 A1 ist eine Überwachungsvorrichtung bekannt, die zum Abschalten von Fernsehsendungen mit jugendgefährdendem Inhalt dient. Diese Überwachungsvorrichtung überprüft zu diesem Zweck ein demoduliertes Videosignal einer Sendung auf ein bei jugendgefährdendem Inhalt der Sendung ausgestrahltes Zusatzsignal und unterbricht beim Erfassen des Zuatzsignals den Signalfluss zum Bildschirm des Fernsehers.

Weiterhin ist aus der DE 197 37 651 A1 ein Verfahren zur Fernbedienung elektrischer und/oder elektronischer Geräte bekannt, bei dem mittels Anbieter- und/oder Empfängeradresse im Internetsystem Daten in einem örtlichen Rechner geladen, die geladenen Daten selektiert und über Draht-und/oder drahtlose Verbindung(en) Codes generiert oder ausgelöst werden, die vorbestimmte Schalt- und/oder Einstellvorgänge in den oder dem Gerät bewirken. Zu Beginn einer Sendung schaltet der TV Scout.com-Controller per Infrarot z. B. den Videorecorder ein. Oder das Fernsehgerät wird eingeschaltet und ein Signalton ertönt. Am Ende einer Sendung werden die Geräte wieder abgeschaltet.

Die Aufgabe der Erfindung besteht darin, ein Fernsehgerät anzugeben, bei dem die Abschaltautomatik verbessert ist und ohne Generierung von Zeitfenstern arbeitet.

Diese Aufgabe wird durch ein Fernsehgerät mit den im Anspruch 1 angegebenen Merkmalen gelöst. Vorteilhafte Ausgestaltungen und Weiterbildung der Erfindung sind in den abhängigen Ansprüchen angegeben.

Die Vorteile der Erfindung bestehen insbesondere darin, dass bei einem mit den erfindungsgemäßen Merkmalen ausgestatteten Fernsehgerät eine Abschaltung des Gerätes spätestens am Ende des momentan empfangenen Sendebeitrags erfolgt, ohne dass der Benutzer die Abschaltzeit des Fernsehgerätes mittels der Bedieneinheit vorgeben muss.

Diese Vorteile werden im Wesentlichen dadurch erreicht, dass die Steuereinheit des Fernsehgerätes als Reaktion auf den Empfang eines Bedienbefehls, der den automatischen Abschaltvorgang einleitet, den Zeitpunkt der Abschaltung unter Berücksichtigung einer Zeitinformation ermittelt, die in dem momentan empfangenen Fernsehsignal enthalten ist oder zeitgleich mit dem momentan empfangenen Fernsehsignal übertragen wird oder aus dem Signalinhalt ableitbar ist.

Bei dieser Zeitinformation handelt es sich vorzugsweise um die Endzeit des momentan empfangenen Sendebeitrags oder um die Anfangszeit des nachfolgenden Sendebeitrags. Diese Zeitinformation wird beispielsweise in der Austastlücke des Fernsehsignals als Bestandteil eines dem momentanen Sendebeitrag zugehörigen Programmsignals übertragen oder im Falle eines Empfangs von digitalen Fernsehsignalen als Bestandteil eines zeitgleich mit dem momentanen Sendebeitrag übertragenen Datenpaketes. Diese Zeitinformation kann aus dem empfangenen Signal in einfacher Weise mittels einer Abtrenneinheit separiert und der Steuereinheit des Fernsehgerätes zwecks einer Auswertung zur Verfügung gestellt werden.

Die Zeitinformationen, die die Endzeit oder die Anfangszeit des momentan empfangenen Sendebeitrags oder die Anfangszeit des nachfolgenden Sendebeitrags beinhalten, lassen sich auf mannigfaltige Weise ermitteln. Beispielsweise werden beim digitalen Fernsehen mit der Serviceinformation die Daten übertragen. Diese können vom Gerät abgespeichert und abgerufen und dem jeweiligen Programmbeitrag zugeordnet werden. Wenn diese Serviceinformationen nicht aktualisiert werden, so ist es auch möglich, das Ende eines vorhergehenden Sendebeitrags und/oder den Anfang des laufenden Sendebeitrags zu detektieren. Hierzu kann auf einfache Weise die Präsent- und Following-Information, die mit der laufenden Sendung in der Regel übertragen wird, ausgewertet werden. Dabei handelt es sich um eine Kennzahl, die mit übertragen wird und signalisiert, wann eine Sendung zu Ende geht bzw. eine neue beginnt.

Es ist aber auch möglich, das allseits bekannte VPS-Signal, das mit übertragen wird, auszuwerten. Allerdings wird dieses VPS-Signal nicht mit allen Programmbeiträgen von allen Sendeanstalten übertragen. Wenn also diese Signalinformationen nicht vorliegen, sieht die im Anspruch 1 angegebene Alternative vor, dass das Ende eines Programmbeitrages oder der Beginn eines Programmbeitrages anhand der Texteinträge in dem Videosignal ermittelt wird. Gleich ob nun das Programmende oder der Beginn des Programmbeitrags erfasst wird, kann hieraus in jedem Fall der Beginn der Sendung ermittelt werden. Ein System, das dies ermöglicht, ist in der DE 699 35 504 T2 beschrieben. Wenn der Beginn eines Programmbeitrags festliegt, stellt die Steuerschaltung fest, welchem Programmbeitrag dieses Datum zuzuordnen ist. Hierzu werden die Programmlisten, die über den Servicekanal empfangen worden sind, durchgesehen bzw. die EPG-Daten, die entweder die Laufdauer eines Programmbeitrages angeben oder den Start oder das Ende auswertet. Im letzteren Fall wird die Laufdauer des Programmbeitrages aus den Daten ermittelt und daraus die aktuelle Endzeit des Programmbeitrags ermittelt, zu welchem die Steuereinrichtung das Gerät abschalten soll. Hierüber ist also ein Abschalten zum Zeitpunkt des Endes des Programmbeitrags auch möglich. Wenn alle Kombinationen vom Rechner der Steuereinheit ausgewertet werden, so kann darüber hinaus aus den drei angegebenen Möglichkeiten eine Vorzugsmöglichkeit eingestellt werden. In jedem Fall soll sichergestellt sein, dass bei verschobenem Beginn einer Sendung gegenüber der Vorschau, die in den EPG-Daten wiederzufinden sind, ein exaktes Abschalten zum Beitragsende möglich ist.

Versuche bei der Auswertung der Textinhalte haben gezeigt, dass mit einer Bilderkennung der Bildsequenzen mit Textinhalten ein Zeitraum zwischen 5 sec. bis 20 sec. vollständig ausreichend ist, um einen Vorspann eines Programmbeitrags oder einen Abspann zu erkennen.

In vorteilhafter Weise ist die Steuereinheit des Weiteren dazu vorgesehen, zu einem Zeitpunkt vor der Abschaltung ein Steuersignal bereitzustellen, aufgrund dessen auf dem Display des Fernsehgerätes ein alphanumerischer Hinweis eingeblendet wird, der die Abschaltung des Fernsehgerätes ankündigt und den Benutzer dazu auffordert, einen Bedienbefehl einzugeben, der die automatische Abschaltung des Fernsehgerätes zum Endzeitpunkt der momentan empfangenen Sendung unterbindet. Durch diesen Hinweis wird dem Benutzer die Möglichkeit gegeben, dem Gerät durch Eingabe eines Bedienbefehles zu signalisieren, dass er noch wach ist und weiter Fernsehen möchte.

Alternativ oder zusätzlich dazu ist die Steuereinheit derart ausgebildet, dass sie zu einem Zeitpunkt vor der Abschaltung ein Steuersignal bereitstellt, aufgrund dessen mittels eines Lautsprechers des Fernsehgerätes ein Signal ausgegeben wird, das die Abschaltung des Fernsehgerätes ankündigt. Bei diesem Signal kann es sich um einen Weckton, beispielsweise einen Klingelton, handeln. Der Vorteil dieser Ausführungsform besteht darin, dass ein Fernsehzuschauer, der beim Betrachten der momentan empfangenen Fernsehsendung bereits eingeschlafen ist, wieder geweckt wird und die momentan empfangene Fernsehsendung bis zu deren Ende betrachten kann, wenn er dies möchte.

In vorteilhafter Weise schaltet die Steuereinheit das Fernsehgerät am ermittelten Zeitpunkt der Abschaltung ab, wenn zwischen dem Zeitpunkt der Bereitstellung des Steuersignals und dem ermittelten Zeitpunkt der Abschaltung kein Bedienbefehl eingegeben wird. Durch diese Maßnahme wird erreicht, dass das Fernsehgerät am Ende des momentan empfangenen Sendebeitrags automatisch abgeschaltet wird, wenn der Zuschauer auf die Bereitstellung des Steuersignals nicht reagiert, beispielsweise deshalb, weil der fest weiterschläft oder weil er den Raum, in dem sich das Fernsehgerät befindet, verlassen hat und nicht mehr an das laufende Fernsehgerät denkt.

Gemäß einer Ausführungsform berechnet die Steuereinheit den Zeitpunkt der Bereitstellung des Steuersignals, indem sie vom ermittelten Zeitpunkt der Abschaltung eine vorgegebene Zeitdauer subtrahiert. Diese Ausführungsform ist durch eine entsprechende Programmierung der Steuereinheit in einfacher Weise realisierbar. Die vorgegebene Zeitdauer kann dabei durch die Programmierung der Steuereinheit vorgegeben sein oder alternativ dazu mittels der Bedieneinheit des Fernsehgerätes eingegeben werden. Im letzteren Fall hat der Zuschauer die Möglichkeit, die vorgegebene Zeitdauer entsprechend seinen individuellen Wünschen festzulegen.

Eine weitere Alternative besteht darin, die vorgegebene Zeitdauer von der Größe der Zeitdifferenz zwischen dem Empfang des Fernbediensignals und dem ermittelten Zeitpunkt der Abschaltung abhängig zu machen. Beispielsweise kann die vorgegebene Zeitdauer der Hälfte der Zeitdifferenz zwischen dem Empfang des Fernbediensignals und dem ermittelten Zeitpunkt der Abschaltung entsprechen.

Eine weitere Alternative besteht darin, dass die Steuereinheit den Zeitpunkt der Eingabe des Bedienbefehls registriert und das Steuersignal dann bereitstellt, wenn nach dem Empfang des Bedienbefehls für eine vorgegebene Zeitdauer kein weiterer Bedienbefehl eingegeben wird. Bei dieser Alternative wird bei einem längeren Untätigsein des Zuschauers die Möglichkeit gesehen, dass der Zuschauer eingeschlafen oder nicht mehr anwesend ist. Es kann dann - sofern nach Bereitstellung des Steuersignals innerhalb einer vorgegebenen Zeitdauer kein Bedienbefehl eingegeben wird - das Gerät bereit zu einem vergleichsweise frühen Zeitpunkt abgeschaltet werden, wodurch der Energieverbrauch des Fernsehgerätes reduziert wird.

Eine weitere Alternative besteht darin, mittels eines Bewegungsdetektors, der beispielsweise in das Gehäuse des Fernsehgerätes eingebaut ist, den Raum in der Umgebung des Fernsehgerätes daraufhin zu überwachen, ob dort Bewegungen auftreten. Treten innerhalb eines vorgegebenen Zeitraumes dort keine Bewegungen auf, dann wird vermutet, dass der Fernsehzuschauer eingeschlafen ist oder den Raum verlassen hat und es erfolgt die Ausgabe des Steuersignals durch die Steuereinheit, aufgrund dessen der Benutzer auf die bevorstehende Abschaltung des Fernsehgerätes aufmerksam gemacht wird. Erfolgt dann innerhalb eines vorgegebenen Zeitintervalles, welches beispielsweise 30 Sekunden beträgt, keine Eingabe eines Bedienbefehles, dann erfolgt eine Abschaltung des Gerätes.

Eine vorteilhafte Weiterbildung der Erfindung besteht darin, im Falle des Ausbleibens der Eingabe eines Bedienbefehls nach erfolgter Ausgabe des Steuersignals eine Aufzeichnung des restlichen Sendebeitrags mittels einer Aufzeichnungseinheit in die Wege zu leiten. Dies eröffnet dem Zuschauer die Möglichkeit, den restlichen Sendebeitrag zu einem späteren Zeitpunkt zu betrachten.

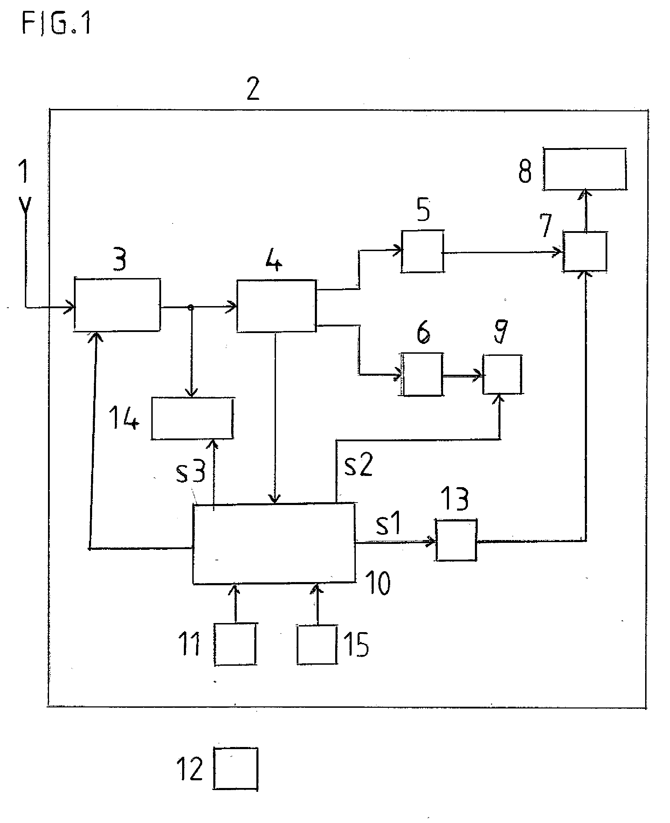

Nachfolgend wird ein Ausführungsbeispiel für die Erfindung anhand der Figur 1 näher erläutert. Diese zeigt eine Blockdarstellung eines Fernsehgerätes mit den erfindungsgemäßen Merkmalen.

Das dargestellte Fernsehgerät 2 ist an eine Antenne 1 angeschlossen. Einer Empfangseinheit 3 des Fernsehgerätes, welche einen Tuner umfasst, werden von der Antenne 1 abgeleitete Empfangssignale zugeführt. Die Empfangseinheit 3 ist durch ein von einer Steuereinheit 10 ausgegebenes Abstimmsignal auf einen gewünschten Fernsehkanal abgestimmt, in welchem momentan ein gewünschter Sendebeitrag übertragen wird. Die aus dem Empfangssignal mittels der Empfangseinheit 3 separierten Signale des gewünschten Fernsehkanals werden einer Abtrenneinheit 4 zugeführt. Diese ist dazu vorgesehen, aus dem Ausgangssignal der Empfangseinheit 3 die Video-, Audio- und Begleitsignalanteile des Fernsehsignals zu extrahieren.

Die Videosignalanteile werden über eine Videosignalverarbeitungseinheit 5 und eine Eintasteinheit 7 dem Display 8 des Fernsehgerätes zugeführt. Die Audiosignalanteile werden über eine Audiosignalverarbeitungseinheit 6 an die Lautsprecher 9 des Fernsehgerätes weitergegeben.

Die Begleitsignalanteile werden der Steuereinheit 10 zugeführt und dort ausgewertet. Bei diesen Begleitsignalanteilen handelt es sich beispielsweise um dem momentanen Sendebeitrag zugeordnete Signale, die dem momentanen Sendebeitrag zugehörige Programmdaten enthalten. Zu diesen Programmdaten gehört die Endzeit des momentanen Sendebeitrags und/oder die Anfangszeit des nachfolgenden Sendebeitrags.

Die Steuereinheit 10 ist des Weiteren mit einem Fernbedienempfänger 11 verbunden, der von einem Fernbediengeber 12 ausgestrahlte Bediensignale an die Steuereinheit 10 weiterleitet. Ferner ist die Steuereinheit 10 dazu vorgesehen, ein Steuersignal s1 an einen Zeichengenerator 13, ein Steuersignal s2 an die Lautsprecher 9 und ein Steuersignal s3 an eine Aufzeichnungsvorrichtung 14 auszugeben, bei welcher es sich beispielsweise um einen Festplattenspeicher handelt.

Am Gehäuse des Fernsehgerätes 1 ist des Weiteren ein Bewegungsdetektor 15 vorgesehen, der den Raum, in dem das Fernsehgerät 2 aufgestellt ist, überwacht, um dort auftretende Bewegungen zu detektieren. Die Ausgangssignale dieses Bewegungsdetektors 15 werden der Steuereinheit 10 zugeführt.

Das gezeigte Fernsehgerät 2 arbeitet wie folgt:

Während der Betrachtung eines momentanen Sendebeitrags gibt der Zuschauer mittels des Fernbedienungsgebers 12 einen Bedienbefehl ein, um einen automatischen Abschaltvorgang einzuleiten, mittels welchem das Fernsehgerät vom eingeschalteten Zustand in den Bereitschaftsbetrieb oder den ausgeschalteten Zustand schaltbar ist. Dieser Bedienbefehl wird der Steuereinheit 10 über den Fernbedienempfänger 11 zugeleitet.

Die Steuereinheit 10 empfängt den genannten Bedienbefehl und registriert den Zeitpunkt von dessen Empfang. Des Weiteren ermittelt die Steuereinheit als Reaktion auf den Empfang des Bedienbefehls den Zeitpunkt der automatischen Abschaltung des Fernsehgerätes. Dies geschieht durch eine Auswertung der Programmdaten, die der Steuereinheit von der Abtrennschaltung 4 bereitgestellt werden. In diesen Programmdaten ist eine Information über die Endzeit des momentanen Sendebeitrags enthalten. Die Steuereinheit 10 legt den Zeitpunkt der Abschaltung des Fernsehgerätes derart fest, dass er mit der Endzeit des momentanen Sendebeitrags übereinstimmt.

Die genannten Programmdaten werden beispielsweise in einem in der Austastlücke des Fernsehsignals enthaltenen Programmbegleit-Signal übertragen oder - wenn digitale Fernsehsignale empfangen werden - in Datenpaketen, die zeitgleich mit dem momentanen Fernsehsignal übertragen werden. In beiden Fällen werden sie mittels der Abtrennschaltung 4 aus dem Ausgangssignal der Empfangseinheit 3 separiert und der Steuereinheit 10 zugeführt.

Die Steuereinheit 10 schaltet das Fernsehgerät 2 in den Bereitschaftsbetrieb oder in den ausgeschalteten Zustand, wenn die von der Steuereinheit 10 unter Berücksichtigung der aus dem momentan empfangenen Fernsehsignal separierten Information über die Endzeit des momentan empfangenen Sendebeitrags ermittelte Abschaltzeit erreicht ist. Die Abschaltung des Fernsehgerätes erfolgt demnach am Ende des momentan empfangenen Sendebeitrags unter Berücksichtigung einer senderbegleitenden Information, die die Endzeit des momentanen Sendebeitrags oder die Anfangszeit eines nachfolgenden Sendebeitrags bezeichnet. Eine Eingabe einer gewünschten Abschaltzeit mittels der Bedieneinheit ist nicht notwendig. Auch das Starten eines Zeitfensters zum Zeitpunkt der Eingabe des Bedienbefehls ist entbehrlich. Ein Vorteil dieser Ausführungsform besteht auch darin, dass das Fernsehgeräte am Ende des momentan empfangenen Sendebeitrags automatisch abgeschaltet wird, wenn der Zuschauer fest eingeschlafen ist oder den Raum, in dem sich das Fernsehgerät befindet, verlassen hat. Durch dieses automatische Abschalten am Ende des momentan empfangenen Sendebeitrags wird der Energieverbrauch des Fernsehgerätes reduziert, da es nicht bis zu einem Abschalten mittels der Bedieneinheit oder einer Ausschalttaste am Gehäuse des Fernsehgerätes weiterläuft.

Um den Fernsehzuschauer auf das bevorstehende Ende des momentan laufenden Sendebeitrags und damit die bevorstehende Abschaltung des Fernsehgerätes aufmerksam zu machen, ist die Steuereinheit 10 des Weiteren derart ausgebildet, dass sie zu einem Zeitpunkt vor der Abschaltung, beispielsweise drei Minuten vor der Abschaltung bzw. drei Minuten vor dem Endzeitpunkt des momentan empfangenen Sendebeitrags, ein Steuersignal s1 bereitstellt, aufgrund dessen auf dem Display 8 ein alphanumerischer Hinweis eingeblendet wird. Dieser alphanumerische Hinweis kündigt die bevorstehende Abschaltung des Fernsehgerätes an und fordert den Benutzer dazu auf, einen Bedienbefehl einzugeben, um die automatische Abschaltung des Fernsehgerätes zum Endzeitpunkt des momentan empfangenen Sendebeitrags zu unterbinden. Das von der Steuereinheit 10 ausgegebene Steuersignal s1 wird dem Zeichengenerator 13 zugeführt, dessen Ausgangssignal über die Eintasteinheit 7 in das auf dem Display 8 anzuzeigende Videosignal eingeblendet wird.

Alternativ oder zusätzlich zu dieser alphanumerischen Anzeige eines Hinweises auf dem Display 8 ist die Steuereinheit 10 des Weiteren derart ausgebildet, dass sie zu einem Zeitpunkt vor der Abschaltung, beispielsweise ebenfalls drei Minuten vor der Abschaltung bzw. drei Minuten vor dem Endzeitpunkt des momentan laufenden Sendebeitrags, ein Steuersignals s2 bereitstellt, aufgrund dessen die Lautsprecher 8 des Fernsehgerätes ein akustische Signal ausgeben, das die bevorstehende Abschaltung des Fernsehgerätes zum Endzeitpunkt des momentan laufenden Sendebeitrags ankündigt. Auch in diesem Falle hat der Zuschauer die Möglichkeit, durch Eingabe eines die automatische Abschaltung unterbindenden Bedienbefehls ein Ausschalten des Fernsehgerätes zu verhindern. Der Vorteil der Ausgabe eines akustischen Hinweissignals liegt darin, dass ein evtl. eingeschlafener Zuschauer durch das akustische Hinweissignal geweckt werden kann und dass ein Zuschauer, der den Raum, in dem das Fernsehgerät aufgestellt ist, verlassen hat und sich in einem Nachbarraum aufhält, auf die bevorstehenden Abschaltung des Fernsehgerätes aufmerksam gemacht werden kann.

Geht der Steuereinheit 10 zwischen der Ausgabe des Steuersignals s1 und/oder s2 und dem ermittelten Endzeitpunkt des momentan laufenden Sendebeitrags kein Bedienbefehl zu, dann schaltet die Steuereinheit zum Endzeitpunkt des momentan laufenden Sendebeitrags das Fernsehgerät vom eingeschalteten Zustand in den Bereitschaftsbetrieb oder den ausgeschalteten Zustand.

Für die Ermittlung des Zeitpunkts, zu welchem die Steuereinheit das Steuersignal s1 und/oder s2 bereitstellt, bestehen mehrere Alternativen.

Gemäß einer ersten Alternative berechnet die Steuereinheit den Zeitpunkt der Bereitstellung des Steuersignals s1, s2, indem sie vom ermittelten Zeitpunkt der Abschaltung eine vorgegebene Zeitdauer subtrahiert. Diese vorgegebene Zeitdauer beträgt beispielsweise - wie bereits oben ausgeführt wurde - drei Minuten und ist entweder vom Hersteller des Fernsehgerätes vorgegeben und in der Software der Steuereinheit 10 hinterlegt oder vom Zuschauer mittels der Bedieneinheit 11, 12 des Fernsehgerätes vorgebbar bzw. programmierbar.

Gemäß einer zweiten Alternative ist die vorgegebene Zeitdauer von der Größe der Differenz zwischen dem Empfang des den automatischen Abschaltvorgang einleitenden Bedienbefehls und dem ermittelten Zeitpunkt der Abschaltung abhängig. Beispielsweise beträgt die vorgegebene Zeitdauer der Hälfte dieser Zeitdifferenz. Folglich wird in dem Fall, dass zwischen dem Empfang des den automatischen Abschaltvorgang einleitenden Bedienbefehls und dem ermittelten Zeitpunkt der Abschaltung 90 Minuten liegen, das Steuersignal s1, s2 nach 45 Minuten ausgegeben.

Gemäß einer dritten Alternative ist die Steuereinheit 10 derart ausgebildet, dass sie den Zeitpunkt der Eingabe des den automatischen Abschaltvorgang einleitenden Bedienbefehls registriert und das Steuersignal s1,s2 dann bereitstellt, wenn nach dem Empfang des Bedienbefehls für eine vorgegebene Zeitdauer kein Bedienbefehl eingegeben wird. Diese vorgegebene Zeitdauer beträgt beispielsweise 20 Minuten.

Gemäß einer vierten Alternative ist die Steuereinheit 10 derart ausgebildet, dass sie den Zeitpunkt der Bereitstellung des Steuersignals s1, s2 in Abhängigkeit vom Ausgangssignal des Bewegungsdetektors 15 ermittelt. Mittels dieses Bewegungsdetektors 15, der beispielsweise im Gehäuse des Fernsehgerätes 2 vorgesehen ist, wird der Raum, in welchem das Fernsehgerät aufgestellt ist, dahingehend überwacht, ob dort Bewegung auftreten. Treten beispielsweise für eine Zeitdauer von 20 Minuten keine Bewegungen auf, dann wird angenommen, dass der Fernsehzuschauer eingeschlafen ist oder den Raum verlassen hat und es erfolgt die Ausgabe des Steuersignals s1 und/oder s2.

Reagiert der Zuschauer nicht innerhalb einer vorgegebenen Zeitspanne auf die alphanumerische und/oder akustische Ausgabe des Hinweissignals, beispielsweise innerhalb von 30 Sekunden, dann schaltet die Steuereinheit 10 das Fernsehgerät vom eingeschalteten Zustand in den Bereitschaftsbetrieb oder den ausgeschalteten Zustand. Erfolgt dies bereits vor dem Endzeitpunkt des momentan empfangenen Sendebeitrags, dann wird im Vergleich zu einer Abschaltung zum Endzeitpunkt der momentan empfangenen Fernsehsendung eine größere Energieeinsparung erzielt.

Eine vorteilhafte Weiterbildung der Erfindung besteht darin, im Falle einer bereits vor dem Endzeitpunkt der momentan laufenden Fernsehsendung erfolgenden Schaltung des Fernsehgerätes in den Bereitschaftsbetrieb eine Aufzeichnung des restlichen Sendebeitrags mittels einer im Fernsehgerät angeordneten Aufzeichnungseinheit 14 in die Wege zu leiten. Bei dieser Aufzeichnungseinheit handelt es sich beispielsweise um einen in das Fernsehgerät integrierten Festplattenspeicher.

### Bezugszeichenliste:

- 1: Antenne
- 2: Fernsehgerät
- 3: Empfangseinheit
- 4: Abtrenneinheit
- 5: Videosignalverarbeitungseinheit
- 6: Audiosignalverarbeitungseinheit
- 7: Eintasteinheit
- 8: Display
- 9: Lautsprecher
- 10: Steuereinheit
- 11: Fernbedienempfänger
- 12: Fernbediengeber
- 13: Zeichengenerator
- 14: Aufzeichnungseinheit
- 15: Bewegungsdetektor

## Patentansprüche

1. Fernsehgerät (2) mit einer Empfangseinheit (3), einer Videosignalverarbeitungseinheit (5), einer Bedieneinheit (11,12), einer Steuereinheit (10) und einem Display (8), bei dem mittels der Bedieneinheit (11,12) ein Bedienbefehl zur Einleitung eines automatischen Abschaltvorgangs, mittels welchem das Fernsehgerät vom eingeschalteten Zustand in den Bereitschaftsbetrieb oder den ausgeschalteten Zustand schaltbar ist, an die Steuereinheit (10) eingebbar ist, und die Steuereinheit (10) als Reaktion auf den Empfang des Bedienbefehls den Zeitpunkt der Abschaltung unter Berücksichtigung einer Zeitinformation ermittelt, die in dem momentan empfangenen Fernsehsignal enthalten ist oder zeitgleich mit dem momentan empfangenen Fernsehsignal übertragen wird oder aus dem Signalinhalt ableitbar ist, **dadurch gekennzeichnet, dass** die Zeitinformation die Endzeit des momentan empfangene Sendebeitrags oder die Anfangszeit des dem momentan empfangenen Sendebeitrag nachfolgenden Sendebeitrags ist und dass die Einleitung des Bedienbefehls des automatischen Abschaltvorganges während der Wiedergabe des momentanen empfangenen Sendebeitrags erfolgt.

2. Fernsehgerät nach Anspruch 1, **dadurch gekennzeichnet, dass** es eine Abtrenneinheit (4) aufweist, deren Eingang mit der Empfangseinheit (3) und deren Ausgang mit der Steuereinheit (10) verbunden ist, um der Steuereinheit (10) die aus dem Ausgangssignal der Empfangseinheit (3) abgetrennte Zeitinformation zuzuführen.

3. Fernsehgerät nach Anspruch 1, **dadurch gekennzeichnet, dass** es eine Videoverarbeitungsanordnung aufweist, die derart ausgelegt ist, dass sie aus dem empfangenen Videosignal Bildtextattribute des Vorspann oder dem Abspann eines Sendebeitrags ermittelt und/oder herausfiltert und ein abgeleitetes Signal generiert, das der Steuereinheit (10) zuführbar ist, und dass die Steuereinheit aus diesem Signal und einer zuvor aus einer Programmankündigung extrahierten Programmbeitragslaufzeit den Zeitpunkt der Abschaltung ermittelt.

4. Fernsehgerät nach einem der vorhergehenden Ansprüche, **dadurch gekennzeichnet, dass** die Steuereinheit (10) zu einem Zeitpunkt vor der Abschaltung ein Steuersignal (s1) bereitstellt, aufgrund dessen auf dem Display (8) ein alphanumerischer Hinweis eingeblendet wird, der die Abschaltung des Fernsehgerätes ankündigt und den Benutzer dazu auffordert, einen Bedienbefehl einzugeben, der die automatische Abschaltung des Fernsehgerätes unterbindet.

5. Fernsehgerät nach einem der vorhergehenden Ansprüche, **dadurch gekennzeichnet, dass** die Steuereinheit (10) zu einem Zeitpunkt vor der Abschaltung ein Steuersignal (s2) bereitstellt, aufgrund dessen mittels eines Lautsprechers (9) des Fernsehgerätes ein Signal ausgegeben wird, das die Abschaltung des Fernsehgerätes ankündigt.

6. Fernsehgerät nach Anspruch 4 oder 5, **dadurch gekennzeichnet, dass** die Steuereinheit (10) das Fernsehgerät am ermittelten Zeitpunkt der Abschaltung abschaltet, wenn zwischen dem Zeitpunkt der Bereitstellung des Steuersignals (s1,s2) und dem ermittelten Zeitpunkt der Abschaltung kein Bedienbefehl eingegeben wird.

7. Fernsehgerät nach einem der Ansprüche 4 bis 6, **dadurch gekennzeichnet, dass** die Steuereinheit (10) den Zeitpunkt der Bereitstellung des Steuersignals (s1,s2) berechnet, indem sie vom ermittelten Zeitpunkt der Abschaltung eine vorgegebene Zeitdauer subtrahiert.

8. Fernsehgerät nach Anspruch 7, **dadurch gekennzeichnet, dass** die vorgegebene Zeitdauer mittels der Bedieneinheit (11,12) programmierbar ist.

9. Fernsehgerät nach Anspruch 7, **dadurch gekennzeichnet, dass** die vorgegebene Zeitdauer von der Größe der Differenz zwischen dem Empfang des Fernbediensignals und dem ermittelten Zeitpunkt der Abschaltung abhängig ist.

10. Fernsehgerät nach einem der Ansprüche 4 bis 6, **dadurch gekennzeichnet, dass** die Steuereinheit den Zeitpunkt der Eingabe des Bedienbefehls registriert und die Steuereinheit das Steuersignal (s1,s2) dann bereitstellt, wenn nach dem Empfang des Bedienbefehls für eine vorgegebene Zeitdauer kein Bedienbefehl eingegeben wird.

11. Fernsehgerät nach einem der Ansprüche 4 bis 6, **dadurch gekennzeichnet, dass** die Steuereinheit (10) den Zeitpunkt der Bereitstellung des Steuersignals (s1,s2) in Abhängigkeit vom Ausgangssignal eines Bewegungsdetektors (15) ermittelt.

12. Fernsehgerät nach einem der Ansprüche 4 bis 11, **dadurch gekennzeichnet, dass** die Steuereinheit (10) eine Aufzeichnung des restlichen Sendebeitrags mittels einer Aufzeichnungseinheit (14) einleitet, wenn nach der Bereitstellung des Steuersignals (s1,s2) innerhalb einer vorgegebenen Zeitspanne kein Bedienbefehl eingegeben wird.
